## Europäisches Patentamt
## European Patent Office
## Office européen des brevets

(11) Numéro de publication: **0 084 996**
A2

# DEMANDE DE BREVET EUROPEEN

(21) Numéro de dépôt: **83400102.6**

(22) Date de dépôt: **14.01.83**

(51) Int. Cl.³: **G 03 H 1/00**

(30) Priorité: **26.01.82 FR 8201202**

(71) Demandeur: **THOMSON-CSF, 173, Boulevard Haussmann, F-75379 Paris Cedex 08 (FR)**

(43) Date de publication de la demande: **03.08.83 Bulletin 83/31**

(72) Inventeur: **Huignard, Jean-Pierre, THOMSON-CSF SCPI 173, bld. Haussmann, F-75379 Paris Cedex 08 (FR)**

(84) Etats contractants désignés: **DE GB NL**

(74) Mandataire: **Wang, Pierre et al, THOMSON-CSF SCPI 173, Bld Haussmann, F-75379 Paris Cedex 08 (FR)**

(54) **Dispositif de cinéma par holographie.**

(57) Dispositif permettant l'enregistrement et la projection d'images holographiques à la cadence de 20 images par seconde.

Un laser ($L_1$) éclaire une scène (P) à filmer et fournit l'onde sphérique de référence (R) pour l'enregistrement de l'hologramme sur le film (F). Le front d'onde ($\xi_1$) diffusé par la scène (P) est amplifié dans un milieu à indice de réfraction induit (C), qui reçoit une onde de référence plane ($\xi_R$) également fournie par le laser ($L_1$). Le front d'onde ($\xi_2$) tombe sur le film à haute résolution et l'hologramme est enregistré.

Application au cinéma en relief et en couleur.

# DISPOSITIF DE CINEMA PAR HOLOGRAPHIE

L'objet de la présente invention est un dispositif permettant de réaliser un cinéma par holographie et donc d'obtenir pour des spectateurs l'effet de relief.

Il est connu que si l'on veut enregistrer par holographie des objets, ayant des dimensions supérieures à 1m, la quantité de lumière diffusée par cet objet et tombant sur la surface sensible est faible. Pour réaliser un hologramme, qui reçoit à la fois cette lumière diffusée et une onde cohérente de référence, il faut avec des lasers ayant une puissance de l'ordre du watt, utiliser des temps de pose supérieure à la seconde. Ceci est dû à la faible sensibilité des supports photographiques de haute résolution, nécessaires à l'holographie. Il n'est donc pas possible d'enregistrer les 20 images secondes nécessaires à une projection cinématographique.

Il est connu , par ailleurs, notamment par l'article de J.P. Huignard et A. Marrakchi paru dans "Optics Communications", volume 38, (1981), page 249, d'amplifier un front d'onde dans des cristaux photoréfractifs tels que $Bi_{12}SiO_{20}$(B.S.O.), par un mélange de deux ondes.

La présente invention, permet grâce à une amplification optique d'obtenir un hologramme nécessitant un temps de pose compatible avec le cinéma.

Brièvement c'est un dispositif de cinéma par holographie, comprenant des moyens d'enregistrement des images holographiques successives d'une scène sur un film photosensible et des moyens de projection des images holographiques caractérisé par le fait que les moyens d'enregistrement comprennent en moins un laser éclairant la scène et fournissant d'autre part l'onde sphérique de référence incident sur le film, que l'onde diffusée par la scène est incidente sur le milieu à variation d'indice de réfraction induite, qui est éclairé par ailleurs par une onde plane obtenue également à partir du faisceau fourni par le laser et que le front d'onde est amplifié dans ce milieu, fournissant le front d'onde amplifié, qui tombe également sur le film.

Dautres caractéristiques et avantages ressortiront de la description qui va suivre, illustrée par les figures qui représentent :

- figure 1, le schéma d'une amplification d'un front d'onde ;

- figure 2, le schéma de principe de l'enregistrement des hologrammes successifs, suivant l'invention ;

- figure 3, le schéma de projection des hologrammes ;

- figure 4, le schéma de montage de la source à 3 couleurs pour un cinéma holographique en couleur.

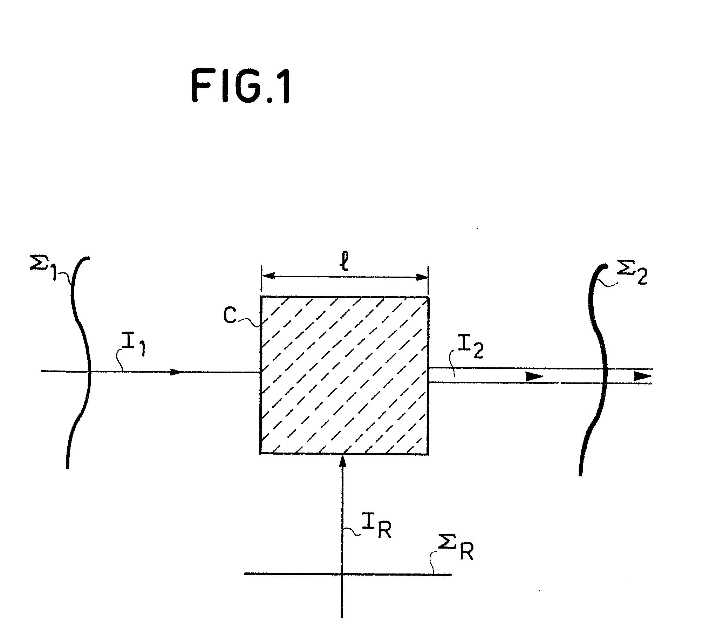

La figure 1 montre le principe connu de l'amplification d'un front d'onde $\Sigma_1$ par un milieu à variation d'indice de réfraction induite C qui est préférentiellement un cristal de B.S.O.

Pour obtenir l'amplification optique il est possible d'utiliser les effets physiques suivants :

- Effet Kerr optique par exemple dans $CS_2$,
- Absorption saturée dans les gaz (vapeur Na ; $SF_6$...),
- Effet photoréfractif : (BSO, $LiNBO_3$, $BaTiO_3$ etc ...),
- Effets thermiques.

Dans certains milieu notamment dans le cristal B.S.O. il est connu que pour avoir une amplification importante il faut réaliser un déphasage entre l'onde de référence et le réseau de variation d'indice, en déplaçant par exemple le cristal ou les strates d'interférence.

L'amplification est obtenue par une onde de référence $\Sigma_R$ et elle résulte de l'auto-diffraction de cette onde de référence, dans le réseau de phase dynamique; induit dans le milieu C.

Le front d'onde amplifié $\Sigma_2$ est identique au front d'onde incident $\Sigma_1$, au coefficient d'amplification près.

L'onde incidente $\Sigma_1$ et l'onde de référence $\Sigma_R$ sont à la même fréquence optique et il en est de même pour l'onde amplifiée $\Sigma_2$.

On montre dans le document déjà cité de J.F. Huignard et A. Marrakchi que dans ces conditions l'intensité de l'onde transmise par le milieu d'intéraction s'écrit sous la forme :

$$I_2 = I_1 \frac{(1 + \beta) \exp (\Gamma - \alpha)}{\beta + \exp (\Gamma \ell)} \qquad (1)$$

où $\beta = I_R/I_1$

et $I_1$, $I_2$ et $I_R$ sont respectivement les intensités des ondes $\Sigma_1$, $\Sigma_2$ et de l'onde de référence $\Sigma_R$, $\ell$ est la longueur du cristal, $\alpha$ son coefficient

d'absorption et $\Gamma$ le gain.

$\Gamma$ est donné par l'expression :

$$\Gamma = \frac{4\pi \; \Delta n_S}{\lambda \cos \psi} \qquad (2)$$

où $\Delta n_S$ est la variation à staturation et $\psi$ l'angle entre les ondes $\Sigma_1$ et $\Sigma_R$.

Si $\beta$ est très grand l'expression (1) se simplifie et devient :

$$I_2 = I_1 \exp (\Gamma - \alpha_1) \qquad (3)$$

De l'expression (1) on trouve la valeur $\ell_o$ de $\ell$, qui donne la plus grande amplification qui est telle que :

$$\ell_o = \log_e \; \beta (\Gamma / \alpha - 1) \qquad (4)$$

A titre d'exemple on prend les valeurs numériques suivantes :

- indice de réfraction à staturation, $\Delta n_S = 10^{-4}$
- coefficient d'absorption, $\alpha = 2 \; cm^{-1}$
- angle entre les fronts d'ondes dans le milieu, $\cos \psi \simeq 1$
- rapport d'intensité référence sur signal $\beta = 10^9$

On trouve d'après (2) et (4)

$\Gamma = 12 \; cm^{-1}$ et $\ell_o = 10 \; mm$

d'où d'après (4)

$I_2/I_1 = 2 \times 10^4$

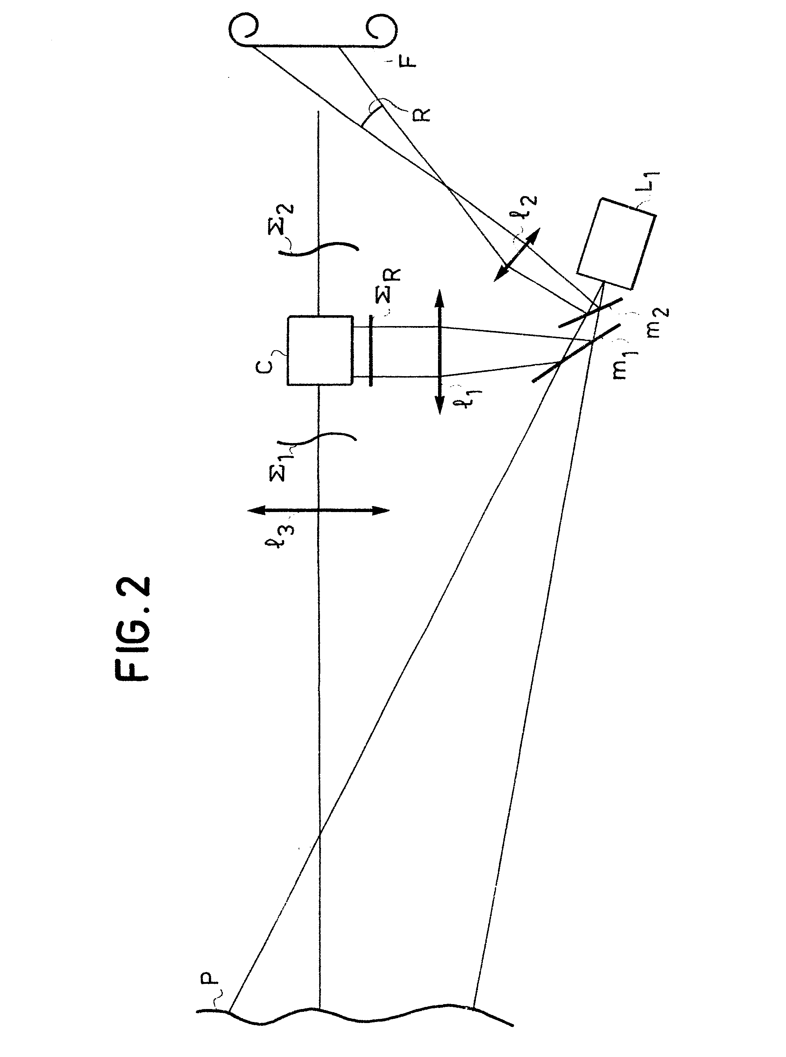

La figure 2 montre la réalisation d'un hologramme d'une scène P sur un film F.

La source lumineuse est un laser $L_1$, qui éclaire la scène à enregistrer P, à travers deux miroirs semi-transparents $m_1$ et $m_2$.

La puissance optique prélevée par le miroir semi-transparent $m_1$ permet de fournir, grâce à un objectif $\ell_1$ l'onde plane de référence $\Sigma_R$ qui éclaire le milieu photoréfractif C. Le miroir semi-transparent $m_2$, prélève la puissance optique nécessaire pour obtenir par l'objectif $\ell_2$ l'onde sphérique de référence oblique pour l'hologramme sur le film F.

La lumière diffusée par la scène P tombe sur un objectif $\ell_3$ fournissant le front d'onde signal $\Sigma_1$ incident sur le milieu photoréfractif, qui fournit par amplification le front d'onde $\Sigma_2$, qui tombe sur le film.

L'hologramme sur le film F est donc obtenu par interférence de l'onde amplifiée $\Sigma_2$ et de l'onde de référence holographique R, fournie par l'objectif $\ell_2$.

Compte tenu de l'amplification, la puissance de l'onde $\Sigma_2$ est telle que le temps de pose, pour un laser $L_1$ fournissant une puissance de l'ordre de 1 watt, est suffisamment forte pour permettre de réaliser un film pour cinéma.

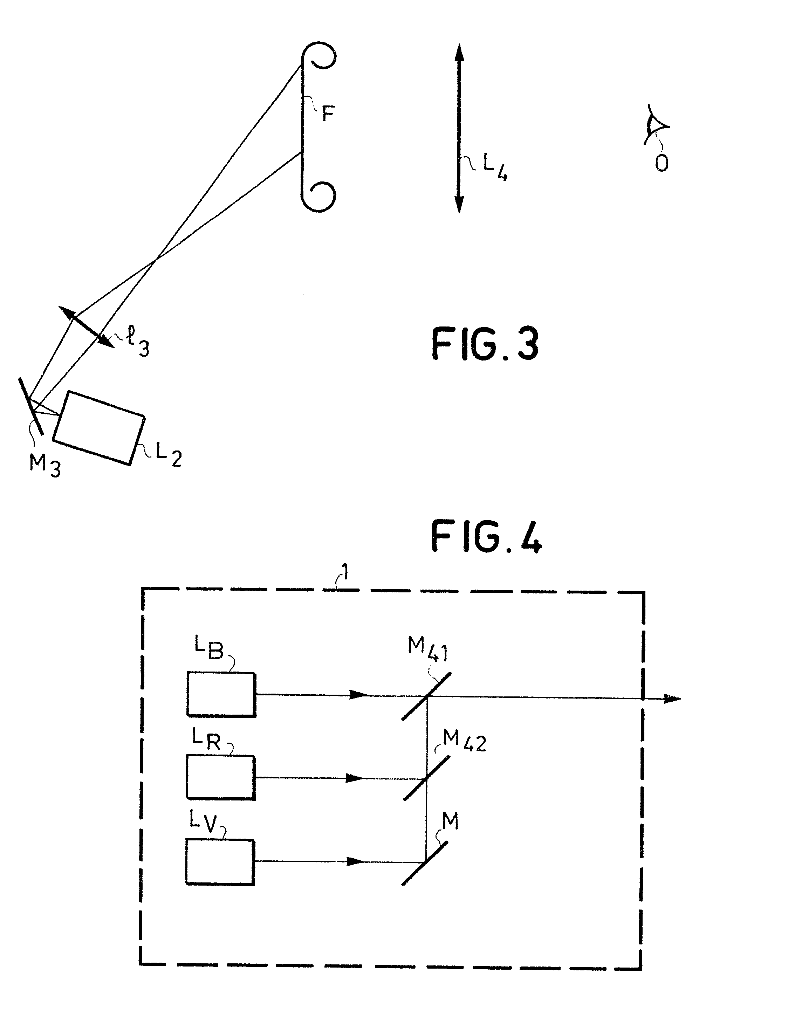

Après développement du film F les hologrammes peuvent être projetés, comme le montre la figure 3. Un laser $L_2$ fournit l'onde sphérique d'éclairement de l'hologramme enregistré, par le miroir $m_3$ et l'objectif $\ell_3$. Un objectif $\ell_4$ rejette l'image pratiquement à l'infini. L'image peut être vue ainsi par un certain nombre de spectateurs.

Dans un exemple d'application on a :

- Dimensions linéaires de la scène P à filmer $\simeq$ 3 m.

- Distance de prise de vue = 10m.

- Puissance du laser d'enregistrement $L_1$ = 2W.

- Surface du milieu amplificateur = 1x1 cm$^2$.

- Longueur $\ell_o$ du milieu amplificateur = 1 cm.

- Gain effectif du milieu amplificateur = $\Gamma - \alpha = 10$ cm$^{-1}$.

- Intensité du signal incident $\Sigma_1$ sur le milieu amplificateur = $I_1$ = 5nW/cm$^2$.

- Intensité de l'onde amplifiée $\Sigma_2$, $I_2$ = 100$\mu$ W/cm$^2$.

- Surface de l'hologramme $\simeq$ 1 cm$^2$.

- Temps de pose de l'hologramme = 50 ms.

- Energie d'inscription pour l'hologramme = 5$\mu$ J.

- Intensité de l'onde de référence R de l'hologramme = 1 mW.

Le temps de pose de 50 ms est suffisant pour un film de haute résolution, nécessaire en holographie et permet d'obtenir la cadence nécessaire pour le cinéma.

Par contre sans amplification le temps de pose dans les mêmes conditions aurait été de 200 sec interdisant cette cadence.

Suivant une variante de l'invention on réalise un cinéma holographique en couleur.

Pour cette réalisation le laser $L_1$ de la figure 2 est remplacé par un ensemble 1 figure 4, comprenant un laser bleu $L_B$, un laser vert $L_V$ et un laser rouge $L_R$, ainsi qu'un miroir M et deux miroirs dichroïques $N_1$ et $N_2$. Ces miroirs permettent de superposer les faisceaux issus des 3 lasers $L_B$, $L_V$ et $L_R$. Le même ensemble 1 sert à la projection.

Des milieux amplifiants tels que B.S.O. peuvent être utilisés pour l'amplification simultanée des 3 fronts d'onde. En effet le cristal B.S.O. est sensible dans le domaine 450-650 nm.

En conclusion on a décrit un nouveau dispositif permettant de réaliser un cinéma en relief monochome ou trichrome.

## REVENDICATIONS

1. Dispositif de cinéma par holographie, comprenant des moyens d'enregistrement des images holographies succesives d'une scène (P) sur un film (F) photosensible et des moyens de projection des images holographiques caractérisé par le fait que les moyens d'enregistrement comprennent au moins un laser $(L_1)$ éclairant la scène (P) et fournissant d'autre part l'onde sphérique de référence (R) incident sur le film (F), que l'onde diffusée ($\Sigma_1$) par la scène (P) est incidente sur le milieu à variation d'indice de réfraction induite (C), qui est éclairé par ailleurs par une onde plane $\Sigma_R$ obtenue également à partir du faisceau fourni par le laser (L) et que le front d'onde ($\Sigma_1$) est amplifié dans ce milieu, fournissant le front d'onde amplifié ($\Sigma_2$), qui tombe également sur le film (F).

2. Dispositif de cinéma par holographie suivant la revendication 1 caractérisé par le fait que les moyens de projection comprennent un laser $(L_2)$ qui fournit une onde sphérique oblique incidente sur le film développé et qu'un objectif ($\ell_4$) est placé de façon à pouvoir projeter l'image holographique de la scène (P) restituée, pour des spectateurs (O).

3. Dispositif de cinéma par holographie suivant les revendications 1 ou 2 caractérisé par le fait que l'on utilise trois lasers $(L_V, L_B, L_R)$ dont les faisceaux sont recombinés pour enregistrer et restituer les images holographiques.

4. Dispositif de cinéma par holographie suivant les revendications 1 ou 3 caractérisé par le fait que le milieu à indice de réfraction induite (C) est photoréfractif.

5. Dispositif de cinéma par holographie suivant la revendication 4 caractérisé par le fait que le milieu photoréfractif est en $Bi_{12} SiO_{20}$ (B.S.O.).

6. Dispositif de cinéma par holographie suivant la revendication 1 caractérisé par le fait que le milieu à variation d'indice de réfraction induite est un gaz présentant une absorption saturée.

7. Dispositif de cinéma par holographie suivant la revendication 1 caractérisé par le fait que le milieu à variation de réfraction induite est un milieu semi-conducteur.

# FIG.1

# FIG.2

0084996

# FIG.3

# FIG.4